# EUROPEAN PATENT APPLICATION

(11) **EP 1 978 062 A1**
(43) Date of publication of application: **08.10.2008**
(21) Application number: 07397008.9
(22) Date of filing: 04.04.2007
(51) Int. Cl.: C09C 1/02, C09C 3/06, C09C 1/42, C09C 1/36, C09C 3/10, C09D 5/02, D21H 17/67

(54) **Method of producing pigment suspensions**

(71) Applicant: M-Real Oyj, 02100 Espoo (FI); Specialty Minerals (Michigan) Inc., Bingham Farms, Michigan 48025 (US)
(72) Inventor: Sahlberg, Teppo, 44120, Äänekoski (FI); Imppola, Olavi, 05800, Hyvinkää (FI)
(74) Representative: Sundman, Patrik Christoffer

(57) **Abstract**

A method of producing a stable aqueous dispersion of a latex, solid particles and a dispersing agent, comprising contacting the latex with an anionic dispersing agent to form a modified latex, feeding the modified latex and the solid particles to a zone of high shear forces, and simultaneously subjecting essentially all of the modified latex and the solid particles fed to said zone to high shear forces to form a latex-paiticle slumy. By means of the invention, over 60 wt-% of the latex can be adsorbed on the solids. Latex immobilization increases the surface strength of final coating layer and allows for a decrease of latex consumption in paper and cardboard and paint applications.

## Description

### Background of the Invention

### Field of the Invention

The present invention relates to aqueous slurries. In particular, the invention concerns improved methods of dispersing solids and latexes in aqueous media. The invention also relates to methods of immobilizing latexes on the surface of solid particles.

### Description of Related Art

Aqueous latex dispersions have a wide range of applications in industry. They are employed for producing coating and surface treatment compositions for use, e.g., in the paper and pulp industry and in the paint industry. In these applications, some light scattering pigments are typically incorporated into the dispersion to form a coating colour or paint composition. Examples of suitable inorganic pigments include precipitated and ground calcium carbonate for coating colours and titanium dioxide for paint compositions.

Conventionally, the inorganic particles are dispersed into the latex dispersion with the aid of a dispersing agent under vigorous stirring. A pigment-latex dispersion is then obtained wherein most of the latex polymer is present in the free state, i.e. not bonded to the inorganic particles.

A novel kind of aqueous pigment-latex slurries are disclosed in our earlier patent application no. 07397007.1, titled Aqueous Dispersions and Method for the Production Thereof, filed on 30.3. 2007, the contents of which are herewith incorporated by reference. In these pigment-latex slurries, at least a part of the dispersing agent is adsorbed onto the latex particles in a first step of the process to provide modified latex particles, and the adsorbed dispersing agent will assist in immobilizing the modified latex particles on the surfaces of the solids.

In the earlier application, contacting of the modified latex with the solid particles is carried out with intensive mixing.

### Summary of the Invention

It is an aim of the present invention to provide an alternative method of producing a stable aqueous dispersion of a latex, solid particles and a dispersing agent.

It is another aim of the invention to provide a method of immobilizing latex on the surface of solid particles.

As known in the art, solid particles are often provided in the form of a granular powder containing agglomerated fine particles. Typically this is the case for precipitated calcium carbonate and similar precipitated particles, which are supplied and used in the form of moist filter cakes. For the preparation of, e.g., coating colours, these filter cakes need to be slurried and the agglomerates should be broken up (desagglomerated) before the particles are dispersed with the aid of conventional dispersing agents.

As mentioned above, in the novel technology the modified latexes are contacted with the pigments under intensive mixing. In the context of the present invention we have found out that both the step of desagglomeration of the inorganic solids and the step of contacting the particles with the modified latex are preferably carried out in a zone of high shear forces. Preferably, the latex polymers should be present during desagglomeration so as to be able immediately to occupy the free sites of the surfaces of the solid particles - in other words, the two processes should be carried out as close to each other as possible, preferably simultaneously.

Conventional mixing processes are not sufficient to meet these demands. According to our trials, conventional mixing blade does not provide a sufficiently high shear field to allow for dispersing within industrially reasonable processing times. Furthermore, conventional mixers only randomly break the agglomerates, which further extend the dispersing time.

The invention is therefore based on the finding that pigment and other solid particles can be efficiently dispersed with a modified latex, obtained by contacting a conventional latex with an anionic dispersing agent, if they are subjected to high shear forces by conducted them - either mixed together or separately fed - through a zone of high shear forces to form a latex-particle slurry. Since the raw-materials are fed through the zone of high shear forces, said forces are exerted to all or practically all of the raw-materials. By contrast, with conventional mixers, the high shear zone only comprises a minor part of the raw-materials.

More specifically, the method of producing an aqueous dispersion according to the present invention is characterized by what is stated in the characterizing part of claim 1.

The method of immobilizing latex on solid particles is characterized by what is stated in the characterizing part of claim 30.

Considerable advantages are obtained by the invention. Thus, in the present method the lead-time is shortened and there is no need to compromise in the technology by using too much dispersing agent. Surprisingly it was noticed that the present invention allows for much better attachment of the used polymer to the solids, such as precipitated calcium carbonate (PCC) and the new process provided is capable of handling the high viscosity of the product. The present method is economical on industrial scale, and it appears that the dosage of the dispersing agent can even be slightly reduced, as can energy consumption of dispersing.

Our results show that high adsorption rates can be reached of over 60 wt-% of the latex adsorbed on the solids. The high adsorption value (latex immobilization) appears to increase the surface strength of final coating layer and therefore allows for a decrease of latex consumption. The efficiency of the high shear mixer makes it possible to reduce the polymer dosages needed for achieving reasonable good rheology properties of product. This is probably due to the ability of the high shear mixer to open the surfaces of undispersed pigments before the addition of incremental dispersing agent.

With the particularly preferred rotor-rotor-mixer described below, extremely high and focused shear can be produced, and with such a mixer the high viscosity of the slurry can be dealt with.

Compared to conventional mixers, the energy consumption, calculated per weight (dry weight) of the slurry treated or produced, is much smaller. As the examples below show, it is possible to cut energy consumption (kWh/t) with at least 20 %, preferably at least 40 %, compared to conventional mixing technology.

The novel dispersions can be used as coating colours for coating of paper or cardboard, or in paint applications.

Next the invention will be examined more closely with the aid of a detailed description and with reference to a number of working examples and to the attached drawings.

### Brief Description of the Drawings

Figure 1 shows the process scheme for a preferred embodiment of the invention, comprising a cascade of two high-shear forces mixers and indicating the feed points of the polymers used in the invention;
Figure 2 shows the process scheme for a first one-mixer embodiment of the invention used in Example 1;
Figure 3 shows the process scheme for a second one-mixer embodiment of the invention used in Example 2;
Figure 4 shows the process scheme for a first mixer cascade embodiment of the invention used in Example 3;
Figure 5 shows the process scheme for an embodiment outside the invention, wherein a conventional mixer is used (cf. Example 4); and
Figure 6 shows the process scheme for a second mixer cascade embodiment of the invention (Example 5).

### Detailed Description of Preferred Embodiments

In order to immobilize latex on the surface of solid particles, a modified latex of the aforementioned kind is first admixed with the solid particles in the presence of water to form an aqueous mixture, and the modified latex are then intimately mixed with the solids particles to adsorb at least a part of the modified latex onto the particles by conducting the mixture through said zone of high shear forces.

The process therefore comprises the steps of
- contacting the latex with an anionic dispersing agent to form a modified latex,
- feeding the modified latex and the solid particles to a zone of high shear forces, and
- simultaneously subjecting essentially all of the modified latex and the solid particles fed to said zone to high shear forces therein to form a latex-particle slurry.

It is preferred to mix the modified latex with intact pigment in order to reach high adsorption rate. In particular, no incremental dispersing agent is added prior or at the same time with latex, because such addition may lower the latex adsorption rate achieved.

Preferably, the modified latex is first admixed with the solid particles in the presence of water to form an aqueous mixture and the aqueous mixture is conducted through the zone of high shear forces. It is also possible to separately feed the modified latex and the solid particles into the zone of high shear forces.

Typically in a mixer with high shear forces, the hold-up of the material passing through the mixing zone is short. Accordingly, the residence time (pass time) of the modified latex and the solid particles fed in the zone of high shear forces is about 0.01 to 60 seconds, in particular about 0.1 to 30 seconds. The feed rate of the pigment is typically about 100 to 10,000 g/s, in particular about 200 to 5,000 g/s. The feed rate of the modified latex is on the same order of magnitude as for the pigment.

Essentially all, preferably at least about 90 wt-%, in particular at least 95 wt-%, advantageously at least 99 wt-%, of the modified latex and the inorganic pigment are passed through the zone of high shear forces.

In the zone of high shear forces, the modified latex and the solid particles are subjected to high shear forces. Typically, the energy intensity is in excess of 500 kWh/m³, in particular 800 kWh/m³ or greater, suitably in excess of 1,000 kWh/m³, preferably it is about 1,100 kWh/m³ to 10,000, and advantageously the energy intensity is approximately 1,100 to 6,000 kWh/m³. The energy intensity is calculated based on the volume occupied by the materials fed into the high shear zone.

In the examples, two different kinds of mixers were used, viz. an impact mixer (Atrex CD350, supplied by Megatrex Oy, Lempäälä, Finland) which comprises two counter rotating mixing elements (rotors), which produce high shear forces and wherein all of the feed, due to the geometry of the mixer, is forced through the zone of high shear forces formed by the rotors. The Atrex CD350 is supplied with two different motors (18.5 and 22 kW), it has a circumference diameter was 0.35 m and the motors were operated with 40 Hz frequency denoting 21.5 m/s radial velocity for the outermost rim. Under the operating conditions of the below examples, the Atrex CD350 typically generates an energy intensity of about 800 to 1550 kWh/m³.

The conventional mixer employed was a blade mixer of the type *Diaf FFB H3* dissolver - with a 1.85 kW motor and operated at a radial velocity of 36 m/s (supplied by DIAF AS, Slagelse, Denmark). Although the blade mixer produces high shear forces at the rim of the blade, there is not formed a zone of high shear forces, through which all or practically all of the material would be forced. Or in other words, with a conventional mixer, it is not possible to subject simultaneously essentially all the material to high shear forces.

The pin mills may comprise, e.g. single and/or double rotor mixers. Thus, the apparatus comprises vane rings rotating in different directions, or a rotating vane ring and a nonrotating vane ring.

The impact mixer typically has a drum of fairly low height and a feed orifice (inlet) is provided in the upper part thereof. One or more vane rings, or grinding rotors, are arranged inside the drum such that at least one of the rotors is rotatably mounted on bearings. The second rotor is statically mounted or rotatable. Thus, a first embodiment comprises a double-ring impact mixer mill wherein both mixing rotors are rotatable, and a second embodiment comprises a mixer where stators with perpendicular mixing pins are provided between the rotatable pin rotors. The planar circumferential disks of the mixing rotors rings are equipped with perpendicular pins.

There are also other mixers capable of providing the required zone of high shear forces through which all of the solids and latex can be conducted. One suitable mixer kind is the Cavitron Rotor/Stator Mixer supplied by v. Hagen & Funke GmbH, Sprockhövel, Germany.

In an alternative embodiment, before the raw-materials are fed into the first zone of high shear forces, a pre-dispersing step can be carried out. The pre-dispersing can be performed in a conventional mixer, e.g. a blade mixer, which is connected to the first of the high shear mixers. During the pre-dispersing step, undispersed pigment surface is partly opened, which enables latex adsorption on it. Should the resulting dispersion be too viscous, conventional dispersing agent can be added to restore flowability of slurry for the sake of pumpability. The slurry is then conducted to the first high shear mixer, where the rest of surface area is exposed to adsorption. The dispersing agent used in the pre-dispersing step may reduce the adsorption of modified latex onto the solid pigments during the following contacting/adsorption steps.

The mixing comprises at least one high shear mixer having at least one rotating rotor element. The mixer may comprise at least one high shear mixer having at least one static stator element and at least one rotating rotor element.

According to a preferred embodiment, at least one of the high shear mixers is of a kind having at least two counter-rotating rotor elements. Such a high shear mixer has at least two counter-rotating rotor elements displaced at a distance of 1 to 10 mm and equipped with several concentric rows of grinding elements, said rotor elements being capable of rotating at a speed of approximately 500 to 5000 rpm. In the examples disclosed below, a high shear force mixer of the type Atrex with two counter-rotating rotors is used.

The contacting/mixing/adsorption step can be carried out in one zone of high shear forces.

In order to increase adsorption, it is however preferred to feed the modified latex and the solid particles into a cascade of mixing zones comprising at least two high shear mixers in a series. Generally the cascade comprises 2 to 4 high shear mixers.

In a cascade of the above kind, at least two of the mixing zones are arranged in such a way that all of the effluent of one mixing zone is fed by gravity into a succeeding mixing zone.

The high shear mixers can in practice be located one upon the other. According to one preferred embodiment, the wet undispersed filter cake is fed into the upper mixer, wherein it is combined with the latex under high shear forces. The resulting dispersion is usually thick, paste-like. By arranging the next high shear mixer below the preceding, the dispersion will fall down to the lower mixer by gravity and there is no need for improving flowability of the dispersion. In the second mixer, further opening of pigment surface takes place in the presence of latex.

At least two of the mixing zones can also be arranged in such a way that the effluent of one mixing zone is conducted with a conveyor screw into a succeeding mixing zone.

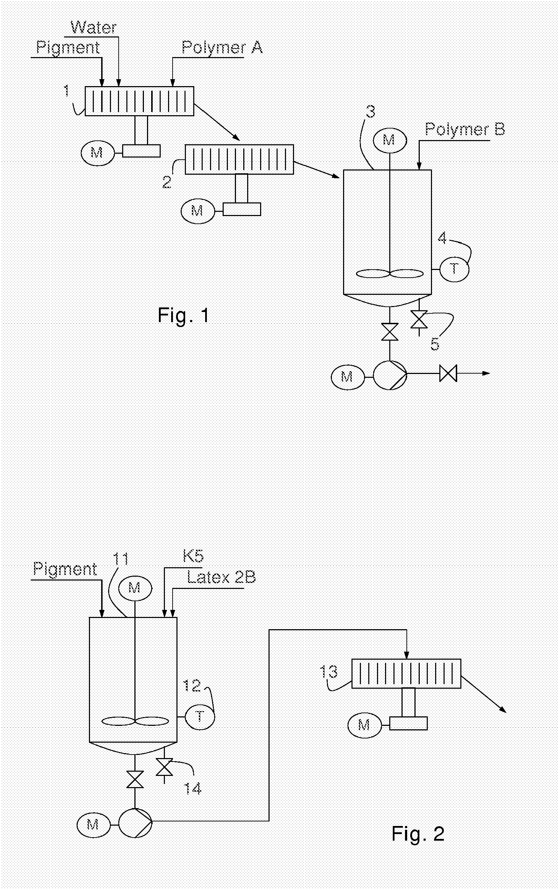

Figure 1 shows an embodiment of the present invention, wherein two mixing zones 1 and 2 are arranged in a cascade. The first mixer 1 is provided with feed nozzles for the pigment, water and the modified latex (Polymer A). The effluent of the first mixer 1 can be conducted to a second mixer 2 arranged in serial configuration with the first to allow for increased dispersion. It is possible to diverge a side stream of the effluent, which can be separately treated, but preferably all of the effluent from the first mixer 1 is conducted directly to the second mixer 2.

The mixed slurry is then withdrawn from the second mixer 2 and it can be fed into a conventional mixing tank 3, which comprises for example a blade mixer. A second dispersing agent (Polymer B) can be added, as will be discussed below, and the temperature of this mixing step is controlled 4, for example with internal or external water-cooling of the tank, and if desired samples can be taken from sample valve 5. After a preset mixing period, or after the preset viscosity has been reached, a pigment/latex slurry is withdrawn from mixer 3.

It should be pointed out that the conventional mixer 3 is optional but preferred, because it facilitates the adjustment of the viscosity and flowability. In particular, when an additional dispersing agent is added to the latex-solids slurry as shown in Figure 1 it allows for adjustment of the flowability of the slurry. This additional dispersing agent is preferably added to the slurry using a conventional mixer, e.g. of the kind mentioned above, although it is naturally possible to add it to the slurry in connection with high shear forces mixing. The additional dispersing agent is dosed purely from the rheology point of view (it is not needed to aid opening of the solids surfaces or pumpability during process) and therefore the competing adsorption with latex do not appear during process.

Generally, it is preferred to use a dispersing agent that has a lower charge density than the dispersing agent used for modification of the latex. Such a dispersing agent is less competitive with the modified latex for binding to the pigment or solids surface.

The preparation of the modified latex is described in our co-pending patent application no. 07397007.1, titled Aqueous Dispersions and Method for the Production Thereof, filed on 30.3. 2007, the contents of which are herewith incorporated by reference.

A typical composition of the dispersion comprises about 1 to 25 parts by weight, preferably about 2 to 20 parts by weight, of latex and dispersing agent per 100 parts by weight of the inorganic particles.

The amount of dispersing agent varies, but it is generally about 0.01 to 10 parts per hundred (pph), preferably between 0.2 and 8 pph, in particular1 and 7 pph parts per 100 parts of dry pigment.

Latex dosage lies between 2 and 9 parts per hundred (pph), preferably between 4 and 7 pph, in particular 5 and 6 pph. The dosage refers to 100 parts of pigment.

These compositions will provide for a significant reduction of the latex consumption compared to conventional dispersions.

For the purpose of the present invention, the term "latex" stands for a water emulsion of small colloidal polymeric particles having an average particle size of about 10 to 1000 nm. The "latex polymer" stands for the polymer of these colloidal particles and "polymer latex dispersion" stands for an aqueous dispersion of latex polymer, dispersant and inorganic particles.

The latex polymer used in the invention can, basically, be of any conventional kind. Thus, soft latex polymers, such as styrene-butadiene (SB), styrene-butyl acrylate (SBA) and polyvinyl acetate (PVAc) can be used. According to the invention, for example a latex polymer of any of the above types, or mixtures thereof, is used as a base latex to which the dispersion agent is bonded. The latex comprises typically (polymer) particles having an average particle size of about 80 to 150 nm, preferably about 110 to 120 nm.

The anionic dispersing agent used for the modification of the latex is typically of a kind that has a charge density of at least 14.1 meq/g, based on a polymeric structure in fully dissociated state, formed by acrylic acid monomers optionally copolymerized or grafted with monomers having several acid groups.

The modified latex is produced by contacting a first dispersing agent with the latex to form a modified latex, and a second portion of the dispersing agent is mixed with the aqueous slurry after the addition of the modified latex.

The dispersing agent is a polymeric compound having acid groups derived from acrylic acid and maleic acid. As a specific example, the dispersing agent can be sodium polyacrylate based. The dispersing agent has a charge density of at least 14.5 meq/g, preferably at least 15.8 meq/g.

As discussed above, the present dispersing method allows for the use of additional dispersing agent (Polymer B in Figure 1), which is added separately, not bound to the latex. According to a particularly preferred embodiment, the separately added dispersing agent is different from the one use for modifying the latex. Thus, it is possible to proceed in such a way that a first portion of a first dispersing agent is contacted with the latex to form a modified latex, and a second portion of a second dispersing agent, different from the first one, is mixed with the aqueous slurry after the addition of the modified latex. The first portion of the dispersing agent comprises about 10 to 95 wt-%, preferably about 20 to 90 wt-%, in particular about 40 to 90 wt-%, of the total amount of the dispersing agent.

The second dispersing agent can also be selected from the group of polyphosphates, lignin sulphonic acid salts, carboxylic acid salts and amine compounds.

The molecular weights (M_{w}) of the above polymeric dispersing agents are generally about 1,000 to 150,000 g/mol, typically about 10,000 to 100,000 g/mol, for example about 15,000 to 80,000 g/mol and in particular 20,000 to 70,000 g/mol. The degree of polymerisation is about 50 to 750, preferably about 100 to 250.

The method is carried out at a temperature of less than 85 °C during the preparation of the dispersion. Preferably, the method is operated at ambient temperature. The pH of the dispersion is maintained in the range of 6.5 to 10, preferably about 7.5 to 9.5.

The solid particles comprise mineral or organic pigments, particles, fibres or granules. It is particularly interesting to produce the slurries from mineral pigments, which comprise precipitated particles. Such mineral pigments can be selected from the group of precipitated calcium carbonate, ground calcium carbonate, kaolin, titanium dioxide, gypsum, talc and barium sulphate, and mixtures thereof. Light-scattering pigment grades are particularly interesting.

The latex-solids slurry, which is an aqueous slurry, has a solids content of at least 10 %, preferably at least 50 %, in particular 60 to 95 % by weight of the slurry. For coating colours, the solids content is in particular about 50 to 80 % by weight and for paint compositions it is 20 to 60 % by weight.

In order to increase the solids content, water may be removed for instance by evaporation, for example in a vacuum evaporator.

Basically, the dispersions can be used as such. However, the properties of the dispersions can be adjusted by incorporating various conventional additives and auxiliary agents. Such agents are, in addition to the dispersants discussed above, agents affecting the viscosity and water retention of the mix (e.g. CMC, hydroxyethyl cellulose, polyacrylates, HASEs, alginates, benzoate), so-called lubricants, hardeners used for improving water-resistance, optical auxiliary agents, anti-foaming agents, pH control agents, and preservatives.

The following examples illustrate the invention.

### Example 1

This example illustrates dispersing of an inorganic pigment using a latex grafted with dispersing agent K5, an anionic acrylic acid based dispersing agent which contains 62 mole-% acrylic acid and 38 mole-% maleic acid (corresponding to a weight ratio of 50:50 of the acrylic versus maleic acid monomers). K5, supplied by Kemira Oyj, Finland, has a charge density of about 15.8 meq/g and a weight average molecular weight (M_{w}) of 15,600.

The process configuration is shown in Figure 2.

The components are first premixed with a Diaf mixer 11 and then the slurry is conducted once through an Atrex impact mixer 13. The water cooling temperature control of the Diaf mixer 12 was installed in order to maintain temperature below 85°C. However, the temperature did not exceed 35°C in the any of experiments 1 to 5 and thus control was not needed. Samples can be taken through valve 14.

First, 7,366 g wet, undispersed PCC pigment (Opacarb A40, supplied by Special Minerals Inc, Äänekoski, Finland) was weighed. The pigment was supplied in the form of a wet filter cake having a solid content of 67.9 %, and the weighed amount therefore equaled 5,000 g dry pigment. Then, 9 parts of a modified latex (Latex 2B) was weighed against the dry pigment. Latex 2B comprised an SB latex of type (Litex PX 9292, supplied by Eka Polymer Latex Oy, Oulu, Finland), which had been modified by grafting 5 parts of dispersing agent K5 onto the SB latex polymer. The grafting is disclosed in more detail in the above- mentioned, co-pending patent applications. The weighed amount of the modified latex was 1108 g wet Latex 2B, having a solids content of 40.6 %.

All the modified latex Latex 2B blend was placed in a 10 L round bottom stainless steel container 11. Addition of Opacarb A40 into the container was initiated progressively by mixing the Latex 2B with a Diaf FFB H3 dissolver equipped with a Type-3 blade, diameter 4" from Blade Shop Inc. (at 36 m/s radial velocity). After an addition of about 80 % of the wet undispersed filter cake (about 5,900 g), the slurry turned very thick (toothpaste like). Dispersing agent K5 was separately added in an amount of 0.3 parts (per 100 parts of dry pigment, which corresponds to 35.3 g wet dispersing agent with a solid content of 42.5 %) to restore the flowability of the slurry.

The rest of the undispersed pigment, about 1,500 g of the wet filter cake, was then added into the container. The slurry remained flowable in spite of this addition. The pH of the slurry was 8.8 without adjustment. The total mixing time in this phase was 30 min and, the material was subjected to an energy intensity of about 140 kWh/m³.

The pigment-latex slurry was then dispersed using an Atrex CD350 impact mixer 13 supplied by Megatrex Oy, Lempäälä, Finland. The slurry was passing through the unit once, the operating rate was 1,200 rpm denoting 21.5 m/s radial velocity for the outermost rim and the temperature was a. 35 °C. The feeding rate of slurry into Atrex unit was about 830 g/s and, thus the delivery cycle of all material was 9 s. The material was subjected to an energy intensity of about 890 kWh/m³.

The high shear viscosity of slurry was measured by an ACAV-A2 Automated Ultra High Shear Viscometer by using 0.6 x 50 mm capillary at 25 °C [supplier: ACA Systems Oy, Outilantie 3, 83750 Sotkuma, Finland]. The viscosity value at the shear rate value 135,000 s⁻¹ was 420 mPas. The static water retention was evaluated for slurry by an AA-GWR Water Retention meter measuring 30 s with 0.30 bar at 25 °C [supplier: Kaltec Scientific, Inc., 22425 Heslip Drive, Novi, MI 48375, USA]. The value was 141 g/m².

The slurry was centrifuged with a Sorvall Instruments RC5C centrifuge equipped with an SS-34 rotor for 40 min at 26,500 G and 25 °C. The latex content of the liquid phase was analyzed with a Shimadzu TOC-V CPH Total Organic Carbon (TOC) analyzer - the samples were diluted at a ratio of 1 to 250 and 1 to 500, respectively. Analysis against the calibration curve of Latex 2B revealed that about 23 % of the latex was adsorbed to the pigment.

The energy consumption of the first mixing stage was 78 kWh/t and for the second about 6 kWh/t.

### Example 2

In this example, inorganic pigment was dispersed using a latex grafted with dispersing agent (denomination K5, cf. Example 1). The slurry was directed once through Atrex impact mixer and then post-mixed with a Diaf mixer.

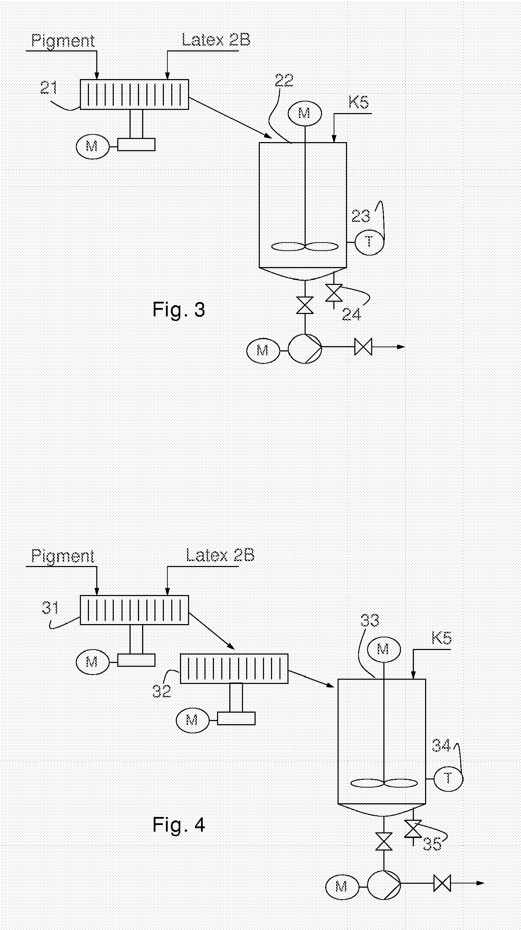

The process configuration is shown in Figure 3.

First, 7,366 g wet, undispersed PCC pigment (Opacarb A40, supplied by Special Minerals Inc, Äänekoski, Finland) was weighed. The pigment was supplied in the form of a wet filter cake having a solid content of 67.9 %, and the weighed amount therefore equaled 5,000 g dry pigment. Then, 9 parts of a modified latex (Latex 2B) was weighed against the dry pigment. Latex 2B comprised an SB latex of type (Litex PX 9292), which had been modified by grafting 5 parts of dispersing agent K5 onto the SB latex polymer (cf. Example 1). The weighed amount of the modified latex was 1108 g wet Latex 2B, having a solids content of 40.6 %.

Opacarb A40 and Latex 2B were fed into the dispersing chamber of an Atrex CD350 impact mixer 21 by constant ratio. The slurry was passing through the unit once, the operating rate was 1,200 rpm denoting 21.5 m/s radial velocity for the outermost rim and the temperature was approx. 35 °C. The feed rate of slurry into the Atrex unit was about 830 g/s and, thus the delivery cycle of all material was 9 s. The material was subjected to an energy intensity of about 1530 kWh/m³.

The slurry (toothpaste like) was carried by gravity into a 10 L round bottom stainless steel container 22 and mixed 10 minutes with a Diaf FFB H3 dissolver equipped with Type-3 blade, diameter 4" from Blade Shop Inc. (at 36 m/s radial velocity). The energy intensity was 143 kWh/m³. Dispersing agent K5 was added in an amount of 0.3 parts (per 100 parts of dry pigment, which amounts to 35.3 g wet dispersing agent with a solid content of 42.5 %) to induce the flowability of the slurry. The pH of the slurry was 8.8 without adjustment. The temperature of the slurry was monitored 23 and when samples were taken through valve 24.

The high shear viscosity of the slurry was measured with an ACAV-A2 Automated Ultra High Shear Viscometer by using 0.6 x 50 mm capillary at 25 °C [supplied by ACA Systems Oy, Outilantie 3, 83750 Sotkuma, Finland]. The viscosity value at the shear rate value 135,000 s⁻¹ was 324 mPas. The static water retention was evaluated for slurry with an AA-GWR Water Retention meter measuring 30 s with 0.30 bar at 25 °C [supplied by Kaltec Scientific, Inc., 22425 Heslip Drive, Novi, MI 48375, USA]. The value was 143 g/m².

The slurry was centrifuged with a Sorvall Instruments RC5C centrifuge equipped with an SS-34 rotor for 40 min at 26,500 G and 25 °C. The latex content of liquid phase was then analyzed with a Shimadzu TOC-V CPH Total Organic Carbon (TOC) analyzer - the samples were diluted at a ratio of 1 to 250 and 1 to 500, respectively. Analysis against the calibration curve of Latex 2B revealed that about 68 % of the latex was adsorbed to the pigment.

The energy consumption of the high shear forces mixing stage was 10 kWh/t and for the second, conventional stage about 26 kWh/t.

### Example 3

This example discloses dispersing of an inorganic pigment using a latex grafted with dispersing agent K5, whereby the pigment/latex slurry is directed twice through an Atrex impact mixer and then post-mixed with a Diaf mixer.

Figure 4 shows the configuration of the equipment, reference numerals 31 and 32 representing high-shear forces mixers and 33 a mixing tank, with temperature control 34 and sample valve 35.

First, 7,366 g wet, undispersed PCC pigment (Opacarb A40, supplied by Special Minerals Inc, Äänekoski, Finland) was weighed. The pigment was supplied in the form of a wet filter cake having a solid content of 67.9 %, and the weighed amount therefore equaled 5,000 g dry pigment. Then, 9 parts of a modified latex (Latex 2B) was weighed against the dry pigment. Latex 2B comprised SB latex of type (Litex PX 9292), which had been modified by grafting 5 parts of dispersing agent K5 onto the SB latex polymer. The weighed amount of the modified latex was 1108 g wet Latex 2B, having a solids content of 40.6%.

Opacarb A40 and Latex 2B were fed into the dispersing chamber of an Atrex CD350 impact mixer 31 by constant ratio. The resultant thick paste was carried by gravity to the next identical Atrex unit 32. In the both cases the operating rate was 1,200 rpm denoting 21.5 m/s radial velocity for the outermost rim and the temperature was about 35 °C. Energy intensity was about 1535 kWh/m³.

The Atrex units were each fed at a rate of about 830 g/s and the pass times were in both Atrex units about 9 s.

Finally the slurry (toothpaste like) was carried by gravity into a 10 L round bottom stainless steel container 33 and mixed for 5 minutes with a Diaf FFB H3 dissolver equipped with Type-3 blade, diameter 4" from Blade Shop Inc. (at 36 m/s radial velocity, and an energy intensity of 71 kWh/m³). Dispersing agent K5 was added in an amount of 0.3 parts (per 100 parts of dry pigment, which amounts to 35.3 g wet dispersing agent with a solid content of 42.5 %) to induce the flowability of the slurry. The pH of the slurry was 8.8 without adjustment.

The high shear viscosity of slurry was measured with an ACAV-A2 Automated Ultra High Shear Viscometer by using 0.6 x 50 mm capillary at 25 °C [supplied by ACA Systems Oy, Outilantie 3, 83750 Sotkuma, Finland]. The viscosity value at the shear rate value 135,000 s⁻¹ was 287 mPas. The static water retention was evaluated for slurry with an AA-GWR Water Retention meter measuring 30 s with 0.30 bar at 25 °C [supplied by Kaltec Scientific, Inc., 22425 Heslip Drive, Novi, MI 48375, USA]. The value was 146 g/m².

The slurry was centrifuged with a Sorvall Instruments RC5C centrifuge equipped with an SS-34 rotor for 40 min at 26,500 G and 25 °C. The latex content of liquid phase was then analyzed with a Shimadzu TOC-V CPH Total Organic Carbon (TOC) analyzer - the samples were diluted at a ratio of 1 to 250 and 1 to 500, respectively. Analysis against the calibration curve of Latex 2B revealed that about 79 % of the latex was adsorbed to the pigment.

The energy consumption of the high shear forces mixing stage was, for the first mixer, 10 kWh/t and for the second mixer 5.5 kWh/t. In the second, conventional mixing stage the energy consumption was about 6.5 kWh/t. Here the low energy consumption of the conventional mixing stage is caused by the fact that the slurry was already extremely well dispersed after the two first Atrex steps.

### Example 4

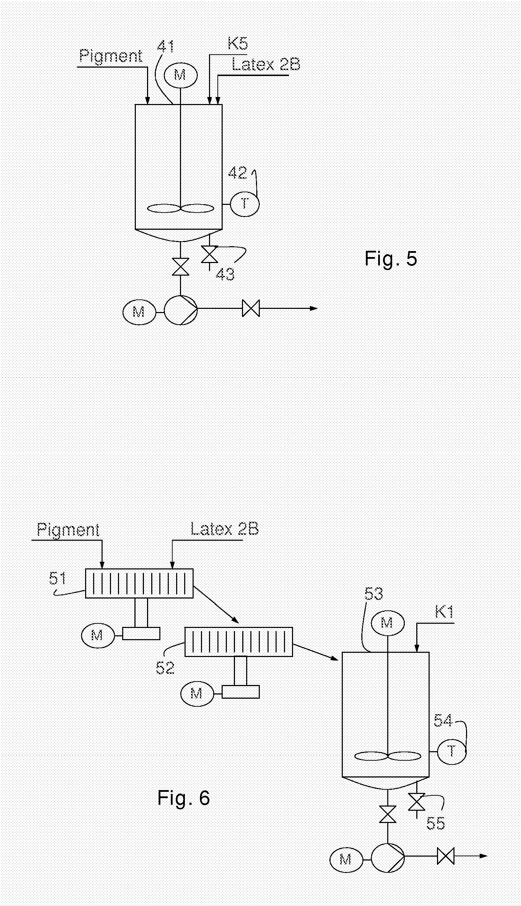

This example illustrates dispersing of an inorganic pigment using a latex grafted with dispersing agent K5 and mixed with a Diaf mixer (cf. Figure 5).

First, 9,576 g wet, undispersed PCC pigment (Opacarb A40, supplied by Special Minerals Inc, Äänekoski, Finland) was weighed. The pigment was supplied in the form of a wet filter cake having a solid content of 67.9 %, and the weighed amount therefore equaled 6,500 g dry pigment. Then, 9 parts of a modified latex (Latex 2B) was weighed against the dry pigment. Latex 2B comprised an SB latex of type Litex PX 9292, which had been modified by grafting 5 parts of dispersing agent K5 onto the SB latex polymer. The weighed amount of the modified latex was 1440 g wet Latex 2B, having a solids content of 40.6 %.

All the modified latex Latex 2B blend was placed in a 10 L round bottom stainless steel container 41. Addition of Opacarb A40 into the container was initiated progressively by mixing the Latex 2B with a Diaf FFB H3 dissolver equipped with Type-3 blade, diameter 4" from Blade Shop Inc. (at 36 m/s radial velocity). After an addition of about 80 % of the wet undispersed filter cake (about 7,660 g), the slurry turned very thick (toothpaste like). Dispersing agent K5 was separately added in an amount of 0.3 parts (per 100 parts of dry pigment, which amounts to 45.9 g wet dispersing agent with a solid content of 42.5 %) to restore the flowability of the slurry.

The rest of the undispersed pigment, about 1,900 g wet filter cake, was then added into the container. The slurry remained flowable in spite of this addition. The pH of the slurry was 8.8 without adjustment. Temperature was monitored (ref. numeral 42) and samples taken via valve 43.

The high shear viscosity of the slurry was measured with an ACAV-A2 Automated Ultra High Shear Viscometer by using 0.6 x 50 mm capillary at 25 °C [ACA Systems Oy, Outilantie 3, 83750 Sotkuma, Finland]. The viscosity value at the shear rate value 135,000 s⁻¹ was 433 mPas. The static water retention was evaluated for slurry with an AA-GWR Water Retention meter measuring 30 s with 0.30 bar at 25 °C [Kaltec Scientific, Inc., 22425 Heslip Drive, Novi, MI 48375, USA]. The value was 137 g/m².

The energy intensity of the mixing stage was 160 kWh/m³ and the energy consumption about 135 kWh/t. The dispersing (mixing) time in the Diaf was 45 minutes.

The slurry was centrifuged with a Sorvall Instruments RC5C centrifuge equipped with an SS-34 rotor for 40 min at 26,500 G and 25 °C. The latex content of liquid phase was then analyzed with a Shimadzu TOC-V CPH Total Organic Carbon (TOC) analyzer - the samples were diluted at a ratio of 1 to 250 and 1 to 500, respectively. Analysis against the calibration curve of Latex 2B revealed that about 29 % of the latex was adsorbed to the pigment.

### Example 5

This example illustrates dispersing of inorganic pigment using a latex grafted with dispersing agent K5. The slurry is directed twice through an Atrex impact mixer and then post-mixed with a Diaf mixer, additional dispersing agent being added.

The configuration of the process is depicted in Figure 5, wherein reference numerals 51 and 52 are used for high-shear forces mixers, 53 for a post-mixer and 54 and 55 for temperature control and sampling valves, respectively.

First, 10,477 g wet, undispersed PCC pigment (Opacarb A40, supplied by Special Minerals Inc, Äänekoski, Finland) was weighed. The pigment was supplied in the form of a wet filter cake having a solid content of 66.8 %, and the weighed amount therefore equalled 7,000 g dry pigment. Then, 9 parts of a modified latex (Latex 2B) was weighed against the dry pigment. Latex 2B comprised SB latex of type Litex PX 9292, which had been modified by grafting 5 parts of dispersing agent K5 onto the SB latex polymer. The weighed amount of the modified latex was 1,551 g wet Latex 2B, having a solids content of 40.6%.

Opacarb A40 and Latex 2B were fed into the dispersing chamber of an Atrex CD350 impact mixer 51 by constant ratio. The resultant thick paste was carried by gravity to the next identical Atrex unit 52. In the both cases the operating rate was 1,200 rpm denoting 21.5 m/s radial velocity for the outermost rim and the temperature was a. 35 °C.

In the two Atrex mixers, the material was subjected to an energy intensity of about 1535 kWh/m³ and 830 kWh/m³, respectively. The feed rates were 830 g/s and pass times 13 s in both.

Finally the slurry (toothpaste like) was carried by gravity into a 10 L round bottom stainless steel container 53 and mixed with a Diaf FFB H3 dissolver equipped with Type-3 blade, diameter 4" from Blade Shop Inc. (at 36 m/s radial velocity). Dispersing agent K1 was added in an amount of 0.1 parts (per 100 parts of dry pigment, which amounts to 16.1 g wet dispersing agent with a solid content of 43.5 %) to induce the flowability of the slurry. The pH of the slurry was 8.8 without adjustment. Dispersing agent K1 is an anionic dispersing agent which is based on 100 mole-% acrylic acid and supplied by Kemira Oyj, Finland. Compared to K5, it has a lower charge density, amounting to about 14.1 meq/g. The average molecular weight of K1 is M_{w} 15,100.

The high shear viscosity of slurry was measured with an ACAV-A2 Automated Ultra High Shear Viscometer by using 0.6 x 50 mm capillary at 25 °C [ACA Systems Oy, Outilantie 3, 83750 Sotkuma, Finland]. The viscosity value at the shear rate value 135,000 s⁻¹ was 155 mPas. The static water retention was evaluated for slurry with an AA-GWR Water Retention meter measuring 30 s with 0.30 bar at 25 °C [Kaltec Scientific, Inc., 22425 Heslip Drive, Novi, MI 48375, USA]. The value was 124 g/m².

The slurry was centrifuged with a Sorvall Instruments RC5C centrifuge equipped with an SS-34 rotor for 40 min at 26,500 G and 25 °C. The latex content of liquid phase was then analyzed with a Shimadzu TOC-V CPH Total Organic Carbon (TOC) analyzer - the samples were diluted at a ratio of 1 to 250 and 1 to 500, respectively. Analysis against the calibration curve of Latex 2B showed that about 94 % of the latex was adsorbed to the pigment, which - when compared with Example 3 - indicates the benefit of using a dispersing agent having a lower charge density for adjusting the viscosity of the mixed slurry than for modifying the latex.

The energy consumption of the high shear forces mixing stage was, for the first mixer, 10.5 kWh/t and for the second mixer 5.7 kWh/t. In the conventional mixing stage the energy consumption was about 2.3 kWh/t which is lower than in Example 3 and which may indicate that dispersant K1 is more efficient than K5.

## Claims

1. A method of producing a stable aqueous dispersion of a latex, solid particles and a dispersing agent, comprising
- contacting the latex with an anionic dispersing agent to form a modified latex,
- feeding the modified latex and the solid particles to a zone of high shear forces, and
- simultaneously subjecting essentially all of the modified latex and the solid particles fed to said zone to high shear forces to form a latex-particle slurry.

2. The method according to claim 1, wherein the modified latex is admixed with the solid particles in the presence of water to form an aqueous mixture and the aqueous mixture is conducted through the zone of high shear forces.

3. The method according to claim 1, wherein the modified latex and the solid particles are separately fed into the zone of high shear forces.

4. The method according to any of claims 1 to 3, wherein the residence time of the modified latex and the solid particles fed in the zone of high shear forces is about 0.01 to 60 seconds.

5. The method according to any of claims 1 to 4, wherein the modified latex and the solid particles are subjected to high shear forces at an energy intensity in excess of 500 kWh/m³, in particular in excess of 1,000 kWh/m³, preferably an energy intensity of approximately 1,100 to 6,000 kWh/m³.

6. The method according to any of the preceding claims, wherein the zone of high shear forces, comprising a mixing zone in a high shear mixer having at least one rotating rotor element.

7. The method according to claim 6, wherein the mixing zone is formed by at least one static stator element and at least one rotating rotor element in said high shear mixer.

8. The method according to claim 6, wherein the mixing zone is formed by at least two counter-rotating rotor elements in said high shear mixer.

9. The method according to claims 8, wherein the high shear mixer has at least two counter-rotating rotor elements displaced at a distance of 1 to 10 mm and equipped with several concentric rows of grinding elements, said rotor elements being capable of rotating at a speed of approximately 500 to 5000 rpm.

10. The method according to any of the preceding claims, wherein the modified latex and the solid particles are fed into a cascade of mixing zones comprising at least two high shear mixers.

11. The method according to claim 10, wherein at least two of the mixing zones are arranged in such a way that the effluent of one mixing zone is fed by gravity into a succeeding mixing zone.

12. The method according to claim 10, wherein at least two of the mixing zones are arranged in such a way that the effluent of one mixing zone is conducted with a conveyor screw into a succeeding mixing zone.

13. The method according to any of the preceding claims, wherein additional dispersing agent is added to the latex-solids slurry to adjust the flowability thereof.

14. The method according to claim 13, wherein the additional dispersing agent is added to the slurry using a conventional mixer.

15. The method according to any of the preceding claims, wherein the anionic dispersing agent has a charge density of at least 14.1 meq/g, based on a polymeric structure in fully dissociated state.formed by acrylic acid monomers optionally copolymerized or grafted with monomers having several acid groups.

16. The method according to any of claims 13 to 15, wherein a first portion of a first dispersing agent is contacted with the latex to form a modified latex, and a second portion of the dispersing agent is mixed with the aqueous slurry after the addition of the modified latex.

17. The method according to any of claims 13 to 15, wherein a first portion of a first dispersing agent is contacted with the latex to form a modified latex, and a second portion of a second dispersing agent, different from the first one, is mixed with the aqueous slurry after the addition of the modified latex.

18. The method according to claim 17, wherein the first portion of the dispersing agent comprises about 10 to 95 wt-%, preferably about 20 to 90 wt-%, in particular about 40 to 90 wt-%, of the total amount of the dispersing agent.

19. The method according to any of the preceding claims, wherein the dispersing agent is a polymeric compound having acid groups derived from acrylic acid and maleic acid.

20. The method according to any of the preceding claims, wherein the dispersing agent is sodium polyacrylate based.

21. The method according to any of the preceding claims, wherein the dispersing agent has a charge density of at least 14.5 meq/g, preferably at least 15.8 meq/g.

22. The method according to claim 17, wherein the second dispersing agent is selected from the group of polyphosphates, lignin sulfonic acid salts, carboxylic acid salts and amine compounds.

23. The method according to any of the preceding claims, wherein the temperature is maintained at less than 85 °C during the preparation of the dispersion.

24. The method according to any of the preceding claims, wherein the pH of the dispersion is adjusted to 6.5 to 10, preferably 7.5 to 9.5.

25. The method according to any of the preceding claims, wherein the solid particles comprise mineral or organic pigments, particles, fibres or granules.

26. The method according to claim 25, wherein the mineral pigments comprise precipitated particles.

27. The method according to claim 25 or 26, wherein the mineral pigments are selected from the group of precipitated calcium carbonate, ground calcium carbonate, kaolin, titanium dioxide, gypsum, talc and barium sulphate.

28. The method according to any of the preceding claims, wherein the latex has particles with an average size of about 80 to 150 nm.

29. The method according to any of the preceding claims, wherein the latex-solids slurry has a solids content of at least 50 %, preferably at least 60 %, in particular 65 to 95 % by weight of the slurry.

30. A method of immobilizing latex on the surface of solid particles, comprising the steps of
- contacting the latex with an anionic dispersing agent to adsorb at least a part of the dispersing agent onto the latex to form a modified latex,
- admixing the modified latex with the solid particles in the presence of water to form an aqueous mixture,
- intimately contacting the modified latex with the solids particles to adsorb at least a part of the modified latex onto the particles by feeding the mixture to a zone of high shear forces, and
- simultaneously subjecting essentially all of the modified latex and the particles to high shear forces in said zone in order to form a stable latex-particle slurry.
